Europäisches Patentamt

European Patent Office

Office européen des brevets

(19)

(11) Veröffentlichungsnummer: **0 167 864**

**A2**

(12) # EUROPÄISCHE PATENTANMELDUNG

(21) Anmeldenummer: **85107244.7**

(22) Anmeldetag: **12.06.85**

(51) Int. Cl.⁴: **G 06 K 19/08**

(30) Priorität: **04.07.84 DE 3424611**

(43) Veröffentlichungstag der Anmeldung:
**15.01.86 Patentblatt 86/3**

(84) Benannte Vertragsstaaten:
**AT BE CH DE FR GB IT LI LU NL SE**

(71) Anmelder: **Dausmann, Günther, Dipl.-Ing.**
**Zur Sterzermühle 9**
**D-8058 Erding(DE)**

(72) Erfinder: **Dausmann, Günther, Dipl.-Ing.**
**Zur Sterzermühle 9**
**D-8058 Erding(DE)**

(74) Vertreter: **Lorenz, Eduard et al,**
**Rechtsanwälte Eduard Lorenz - Bernhard Seidler Margrit**
**Seidler - Dipl.-Ing. Hans-K. Gossel Dr. Ina Philipps - Dr.**
**Paul B. Schäuble Dr. Siegfried Jackermeier**
**Widenmayerstrasse 23 D-8000 München 22(DE)**

(54) Verfahren zum Aufzeichnen von maschinenlesbaren Informationen.

(57) Codierte Informationen werden auf einem blatt-, karten-
oder bandförmigen Aufzeichnungsträger aufgezeichnet und
lassen sich zum Zwecke ihres Lesens mit optischen Mitteln in
elektrische Impulse, vorzugsweise in Form von Bit-Mustern,
umsetzen. Um Informationen mit großer Dichte speichern zu
können, ohne daß die Sicherheit der maschinellen Auslesbarkeit durch Verstaubung oder Verkratzen des Aufzeichnungsträgers nennenswert beeinträchtigt wird, und um
erhöhte Fälschungssicherheit zu erreichen wird auf den
Aufzeichnungsträger oder einen vorbestimmten Teil von
diesem ein Hologramm mit der codierten Information aufgebracht.

**0167864**

12. Juni 1985
83 281  G-die

Dipl.-Ing. Günther Dausmann,
8058 Erding

Verfahren zum Aufzeichnen von
maschinenlesbaren Informationen

Die Erfindung betrifft ein Verfahren zum Aufzeichnen von mit
optischen Mitteln in elektrische Impulse, vorzugsweise in Form
von Bit-Mustern, umsetzbaren codierten Informationen auf einem
blatt-, karten- oder bandförmigen Aufzeichnungsträger, vorzugsweise auf einer fotografischen Trägerschicht.

Maschinenlesbare Informationen zur Kennzeichnung von Waren,
Produkten, Berechtigungsausweisen, Mikrofiches oder dergleichen
bestehen gegenwärtig üblicherweise aus sogenannten Barcodes, die
aus parallelen schwarzen und weißen Streifen unterschiedlicher
Breite entsprechend dem durch das Lesegerät zu generierenden Bitmuster gebildet sind. Neben den Barcodes gibt es auch Lochstreifenmuster oder Muster aus Zeichen anderer Art, die durch
entsprechende Lesegeräte abgetastet werden und in der gespeicherten Information entsprechende Bitmuster umsetzbar sind.

Zur Indexierung archivierter Mikrofiches werden üblicherweise
Barcodes verwendet, die durch Lesegeräte optisch abgetastet
werden, um die jeweilige Spalte und Zeile herauszufinden, in der
sich der gesuchte Fiche befindet.

Mit der zunehmenden Mikroverfilmung und automatischen Auswertung
von Etiketten, Kennzeichen, Berechtigungsausweisen oder dergleichen steigt die Informationsdichte zum Auffinden der einzelnen
Mikrofiches oder Informationen und das Auffinden wird häufig
auch dadurch erschwert, daß Filmstreifen oder sonstige Aufzeichnungsträger verstauben und verkratzen. Durch Verstauben und Verkratzen und andere Einwirkungen wird nicht nur die Lesbarkeit
überhaupt beeinträchtigt, es kann auch zu Fehlinformationen
kommen.

Aufgabe der Erfindung ist es daher, ein Verfahren der eingangs
angegebenen Art zu schaffen, nach dem sich Informationen mit
großer Dichte.speichern lassen, ohne daß die Sicherheit der maschinellen Auslesbarkeit dieser Informationen durch Verstaubung
oder Verkratzen des Aufzeichnungsträgers nennenswert beeinträchtigt wird. Außerdem soll eine Fälschungssicherheit erreicht und
das Kopieren zumindest erschwert werden.

Erfindungsgemäß wird diese Aufgabe dadurch gelöst, daß auf den
Aufzeichnungsträger oder einen vorbestimmten Teil von diesem ein
Hologramm mit der codierten Information aufgebracht wird.

Bei einem Hologramm sind die Informationen nicht nur in einem
Oberflächenelement, sondern in allen Oberflächenelementen gespeichert, so daß eine Verstaubung oder ein Verkratzen eines
Teils der Oberfläche die gespeicherte Information noch nicht
zerstört. Das erfindungsgemäße Speicherverfahren mittels eines
Hologramms ist daher ein redundantes Speicherverfahren großer
Sicherheit.

Die in Form eines Hologramms gespeicherten Informationen lassen
sich reell oder virtuell rekonstruieren, wobei die Sensoren,
beispielsweise Fotozellen, an die Stellen anzuordnen sind, an
denen das rekonstruierte Bild mit der gespeicherten Information
entsteht. Der Aufzeichnungsträger läßt sich berührungsfrei, also
verschleißarm, mit hoher Sicherheit abtasten.

Die Informationen werden zweckmäßigerweise in Form von Barcodes
gespeichert. Es können aber auch Lochstreifenmuster oder analoge
Zeichen verwendet werden.

Das erfindungsgemäße Speicherverfahren eignet sich besonders zur
Mikrofiche-Indexierung und zur Produktkennzeichnung, die hohe
Informationsdichte mit einer hohen Sicherheit beim Auslesen
erfordern.

Das Auslesen der in Hologrammen codierten Informationen ist
gegenüber bekannten Lesegeräten dadurch vereinfacht, daß eine
Abbildungsoptik entfallen kann.

Nach einer vorteilhaften Ausgestaltung ist vorgesehen, daß der
Aufzeichnungsträger zusätzlich mit einem normal sichtbaren Code
(in Form einer Amplitudeninformation, beispielsweise wie in der
DE-PS 28 40 556 beschrieben), beispielsweise einem Barcode,
versehen wird, der sich mit üblichen Lesegeräten auswerten läßt.
Auf diese Weise ist der nach dem erfindungsgemäßen Verfahren mit einem Hologramm versehene Aufzeichnungsträger mit üblichen Lesegeräten kompatibel. Die Aufzeichnung des normal lesbaren Barcodes oder dergleichen sowie die erfindungsgemäße Aufzeichnung der in einem Hologramm codierten Informationen kann nach dem in der DE-PS 28 40 556 beschriebenen Verfahren erfolgen. Von besonderem Vorteil ist, daß sowohl der normal lesbare Code als auch der holografisch codierte Code an denselben Stellen des Aufzeichnungsträgers gespeichert sein kann. Ebenso kann bei gebleichten Hologrammen (Phasenhologrammen) ein darunterliegendes Muster erkannt und sowohl visuell als auch maschinell gelesen werden.

Die Hologramme können in Form von Amplituden- oder Phasenhologrammen aufgezeichnet sein. Sie können in bekannter Weise aus Reflexions- oder Transmissionshologrammen bestehen. Die Hologramme lassen sich in bekannter Weise optisch aufzeichnen, sie können aber auch in Form von Computerhologrammen erzeugt und aufgezeichnet werden. Die Aufzeichnung kann über sogenannte COM-Geräte (Computer Output on Mikrofiche) erfolgen, die die sonst zu plottende Information direkt in dem gewünschten Maßstab auf den Mikrofiche oder den sonstigen Aufzeichnungsträger aufbringen.

Eine besonders hohe Informationsdichte läßt sich erreichen, wenn die Informationen in verschiedenen Ebenen eines räumlichen Hologramms gespeichert werden. Durch entsprechende Anordnung der Auswertungssensoren lassen sich die in jeder Ebene gespeicherten Informationen getrennt oder auch gleichzeitig auslesen.

Die Informationsdichte läßt sich in weiterer Ausgestaltung der Erfindung auch dadurch steigern, daß die Informationen mit einem Licht unterschiedlicher Farbe aufgezeichnet werden. Aufgrund der unterschiedlichen Beugungswinkel jeder Farbe lassen sich die jeweiligen Informationen getrennt oder auch gleichzeitig auslesen, wobei zur Reproduktion weißes Licht verwendet werden kann, das alle Farben enthält.

Sollen beispielsweise Mikrofiches mit einer fortlaufenden Indexierung versehen werden, können Filmstreifen mit fortschaltbaren
Bildern, die die zu speichernden Informationen enthalten, oder
auch LCD's verwendet werden, die entsprechend der gewünschten
Codierung durch entsprechende Beschaltung mit einem Muster versehen werden. Die Aufnahme kann nach dem in der DE-PS 28 40 556
beschriebenen Verfahren erfolgen, wenn neben den in einem Hologramm codierten Informationen Kompatibilität mit herkömmlichen
Lesegeräten verlangt wird. Sind die normal lesbar und in einem
Hologramm zu speichernden Informationen identisch, kann auf ein
Display dadurch verzichtet werden, daß durch einen teildurchlässigen Spiegel das zweite Bild generiert wird.

0167864

12. Juni 1985
83 281  G-die

Dipl.-Ing. Günther Dausmann,
8058 Erding

## Verfahren zum Aufzeichnen von maschinenlesbaren Informationen

**Patentansprüche:**

1.  Verfahren zum Aufzeichnen von mit optischen Mitteln in elektrische Impulse, vorzugsweise in Form von Bit-Mustern, umsetzbaren codierten Informationen auf einem blatt-, karten- oder bandförmigen Aufzeichnungsträger, vorzugsweise auf einer fotografischen Trägerschicht, **dadurch gekennzeichnet**, daß auf den Aufzeichnungsträger oder einen vorbestimmten Teil von diesem ein Hologramm mit der codierten Information aufgebracht wird.

2.    Verfahren nach Anspruch 1, dadurch gekennzeichnet, daß der Aufzeichnungsträger zusätzlich mit einem normal sichtbaren Code, beispielsweise Barcode, versehen wird.

3.    Verfahren nach Anspruch 1 oder 2, dadurch gekennzeichnet, daß die Hologramme in Form von Amplitudenhologrammen aufgezeichnet werden.

4.    Verfahren nach Anspruch 1 oder 2, dadurch gekennzeichnet, daß die Hologramme in Form von Phasenhologrammen aufgezeichnet werden.

5.    Verfahren nach einem der Ansprüche 1 bis 4, dadurch gekennzeichnet, daß die Informationen in verschiedenen Ebenen eines räumlichen Hologramms gespeichert werden.

6.    Verfahren nach einem der vorhergehenden Ansprüche, dadurch gekennzeichnet, daß die Informationen mit Licht unterschiedlicher Farbe aufgezeichnet werden.

7.    Verfahren nach einem der vorhergehenden Ansprüche, dadurch gekennzeichnet, daß die Hologramme durch Computer erzeugt und im COM-Verfahren aufgezeichnet werden.